# EUROPEAN PATENT APPLICATION

(11) **EP 4 249 363 A1**
(43) Date of publication of application: **27.09.2023**
(21) Application number: 21915243.6
(22) Date of filing: 24.12.2021
(51) Int. Cl.: B63B 25/08, B63B 25/16, B63B 27/24, F16L 3/00, F16L 55/00

(54) **CRYOGENIC LIQUID PIPING STRUCTURE AND MARINE VESSEL EQUIPPED THEREWITH**

(30) Priority: 28.12.2020 JP 2020218651
(71) Applicant: KAWASAKI JUKOGYO KABUSHIKI KAISHA, Kobe-shi, Hyogo 650-8670 (JP)
(72) Inventor: GOKAN, Kazuto, Kobe-shi, Hyogo 650-8670 (JP); OHASHI, Tetsuya, Kobe-shi, Hyogo 650-8670 (JP); MATSUMOTO, Akira, Kobe-shi, Hyogo 650-8670 (JP); OSAKI, Naoto, Kobe-shi, Hyogo 650-8670 (JP)
(74) Representative: Arnold & Siedsma
(86) International application number: PCT/JP2021/048299
(87) International publication number: WO 2022/145383

(57) **Abstract**

A cryogenic liquid pipe structure is for use in a vessel that stores a cryogenic liquid having a boiling point of -196°C or lower under a normal pressure. The pipe structure includes: a low-temperature pipe (10) that allows the cryogenic liquid to flow therethrough; and a support member (30) that is in contact with the low-temperature pipe (10) and supports the low-temperature pipe (10) above and away from a structural member (4) of the vessel. The support member (30) is made of low-temperature steel which is less likely to trigger low-temperature embrittlement.

## Description

### Technical Field

The present disclosure relates to a pipe structure for use in a vessel that stores a cryogenic liquid having a boiling point of -196°C or lower under a normal pressure.

### Background Art

Patent Literature 1 below has been known as describing a pipe for allowing such a cryogenic liquid as described above to flow therethrough. Specifically, the pipe in Patent Literature 1 has a double structure, i.e., is a double pipe, for allowing liquefied hydrogen having a boiling point of -253°C under a normal pressure to flow therethrough, and the pipe includes an inner pipe and an outer pipe concentrically arranged. The inner pipe and the outer pipe define therebetween a vacuumed layer for blocking heat transfer. Heat insulation by the vacuumed layer maintains the liquefied hydrogen in the inner pipe at a temperature equal to or lower than the boiling point thereof.

A decrease in a vacuum degree of the heat insulative layer in the double pipe for liquefied hydrogen in Patent Literature 1 easily causes heat transfer between the inner pipe and the outer pipe, resulting in a smaller difference between a temperature of the outer pipe and a temperature of the inner pipe. When the temperature of the outer pipe decreases to reach a value around the temperature of the liquefied hydrogen in the inner pipe, air is likely to be condensed on the surface of the outer pipe.

When the temperature of the outer pipe decreases to a value at which liquefied air comes into existence, other member which is in contact with a temperature decreasing portion where the decrease in the temperature occurs may involve low-temperature embrittlement that a material embrittles due to the decrease in the temperature. A drop of the liquefied air coming into existence at the temperature decreasing portion then flows on a surface of the outer pipe and reaches the other member, and the other member is notably cooled by the liquefied air to involve the low-temperature embrittlement.

### Citation List

### Patent Literature

Patent Literature 1: Japanese Unexamined Patent Publication No. 2017-20914

### Summary of Invention

This disclosure has been achieved in consideration of the circumstances described above, and an object of the disclosure is to provide a cryogenic liquid pipe structure that enables suppression of embrittlement of other member attributed to a decrease in a temperature of a pipe that allows a cryogenic liquid to flow therethrough, and to provide a vessel including the pipe structure.

To solve the drawbacks described above, a cryogenic liquid pipe structure according to one aspect of the present disclosure is for use in a vessel that stores a cryogenic liquid having a boiling point of -196°C or lower under a normal pressure. The cryogenic liquid pipe structure includes: a low-temperature pipe that allows the cryogenic liquid to flow therethrough; and a support member that is in contact with the low-temperature pipe and supports the low-temperature pipe above and away from a structural member of the vessel. The support member is made of low-temperature steel which is less likely to trigger low-temperature embrittlement.

A vessel according to another aspect of the disclosure stores a cryogenic liquid having a boiling point of -196°C or lower under a normal pressure. The vessel includes: a tank that stores the cryogenic liquid; a tank cover that covers the tank; a deck; and the above-described cryogenic liquid pipe structure. The structural member is the tank cover or the deck.

### Brief Description of Drawings

Fig. 1 is a side view of a schematic structure of a vessel adopting a pipe structure according to an embodiment of this disclosure.
Fig. 2 is a cross-sectional view taken along the line II-II in Fig. 1.
Fig. 3 is a cross-sectional perspective view of a structure of a hydrogen pipe.
Fig. 4 is a side view of a structure which allows a tank cover to support the hydrogen pipe.
Fig. 5 is a cross-sectional view taken along the line V-V in Fig. 4.
Fig. 6 is a cross-sectional view taken along the line VI-VI in Fig. 4.
Fig. 7 is an illustration explaining a modification of the embodiment.

### Description of Embodiments

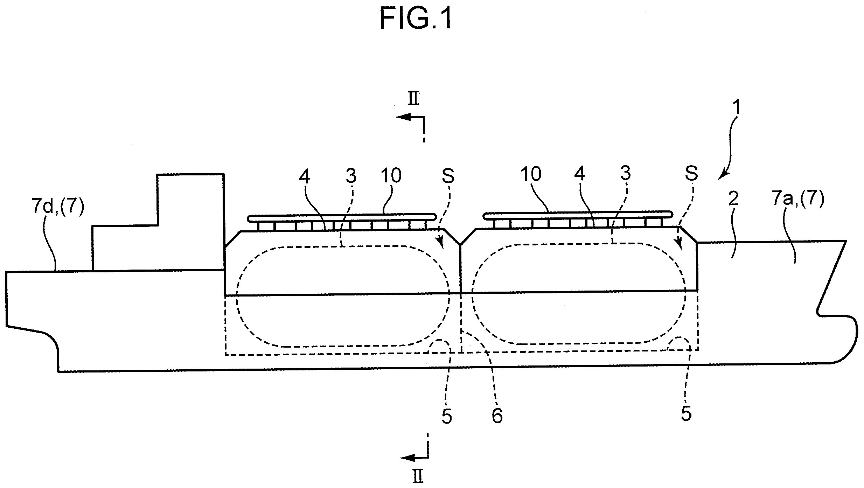

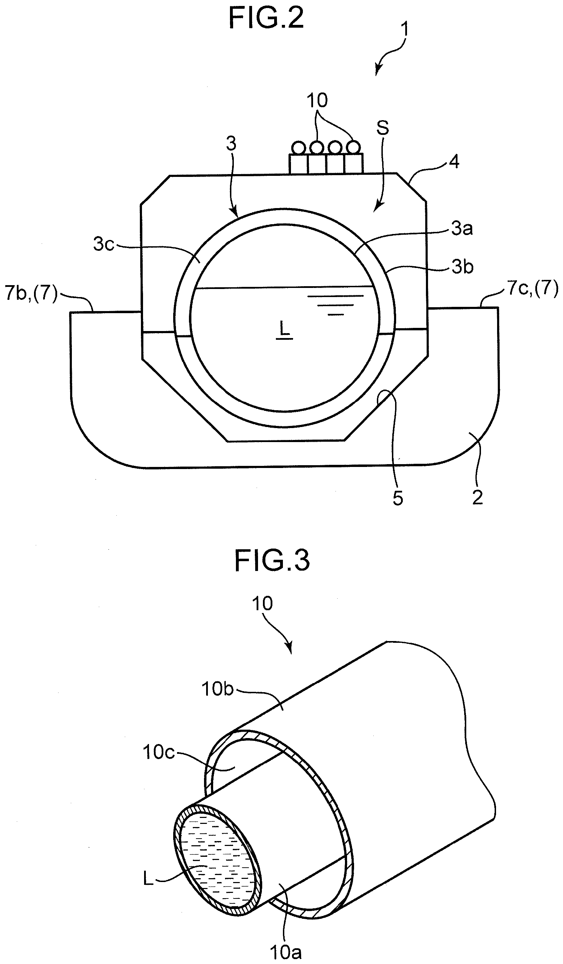

Fig. 1 is a side view of a schematic structure of a vessel adopting a pipe structure according to an embodiment of this disclosure, and Fig. 2 is a cross-sectional view of the schematic structure of the vessel. A vessel 1 illustrated in the drawings is a liquefied hydrogen carrier that stores and carries liquefied hydrogen L (Fig. 2), and the vessel includes a vessel body 2 and two tanks 3 mounted in the vessel body 2. The number of tanks 3 may be three or more, or one. The liquefied hydrogen L to be carried by the vessel 1 in the embodiment indicates hydrogen in a liquid state cooled to a temperature equal to or lower than a boiling point of -253°C under a normal pressure, and corresponds to an example of the cryogenic liquid in this disclosure.

The vessel body 2 includes two cargo holds 5 opening upward in its regions respectively for the tanks 3. A bulkhead 6 is located between the adjacent cargo holds 5 to separate the two cargo holds 5 from each other. The number of cargo holds 5 may be three or more, or one.

The vessel body 2 further includes a deck 7 surrounding the cargo holds 5. The deck 7 has a forecastle 7a located in front of the cargo holds 5, a pair of side decks 7b, 7c respectively located to the left and the right of the cargo holds 5, and a stern deck 7d located in the rear of the cargo holds 5.

Each of the tanks 3 has a long cylindrical shape extending in a vessel longitudinal direction of the vessel 1, and each tank is accommodated in the corresponding cargo hold 5. The tank 3 has an inner tank 3a for storing the liquefied hydrogen L inside and an outer tank 3b arranged concentrically with the inner tank 3a outside the inner tank 3a. The inner tank 3a and the outer tank 3b define therebetween a vacuumed layer 3c for heat insulation. The vacuumed layer 3c is an enclosed space communicable with an unillustrated suction device.

Tank covers 4 are arranged over the tanks 3 respectively. Each tank cover 4 defines an accommodation space S for each tank 3 in cooperation with the corresponding cargo hold 5.

The vessel body 2 is made of steel material. For instance, each of the deck members 7a to 7d and the tank cover 4 is made of general structural soft steel. Although a kind of the structural soft steel is not particularly limited, an SS member (rolled steel member for general structure) defined in the JIS standard is adoptable as an example.

The tank cover 4 has a top surface above which a hydrogen pipe 10 is arranged. The hydrogen pipe 10 is used to at least unload the liquefied hydrogen L in the tank 3 from the vessel 1 and extends along the top surface of the tank cover 4 while appropriately curving. The hydrogen pipe 10 corresponds to an example of the low-temperature pipe in the disclosure. The tank cover 4 located below the hydrogen pipe 10 corresponds to an example of the structural member of the vessel in the disclosure.

Fig. 3 is a cross-sectional perspective view of a structure of the hydrogen pipe 10. As illustrated in the drawing, the hydrogen pipe 10 includes an inner pipe 10a that allows the liquefied hydrogen L to flow therethrough and an outer pipe 10b that is arranged concentrically with the inner pipe 10a outside the inner pipe 10a. The inner pipe 10a and the outer pipe 10b define therebetween a vacuumed layer 10c for heat insulation. The vacuumed layer 10c indicates an enclosed space communicable with an unillustrated suction device.

At least the inner pipe 10a in the hydrogen pipe 10 is made of low-temperature steel having a property less likely to trigger embrittlement even under a cryogenic condition. Although the material of the outer pipe 10b is not necessarily limited to the low-temperature steel, the outer pipe 10b in the embodiment is also made of low-temperature steel in the same manner as the inner pipe 10a.

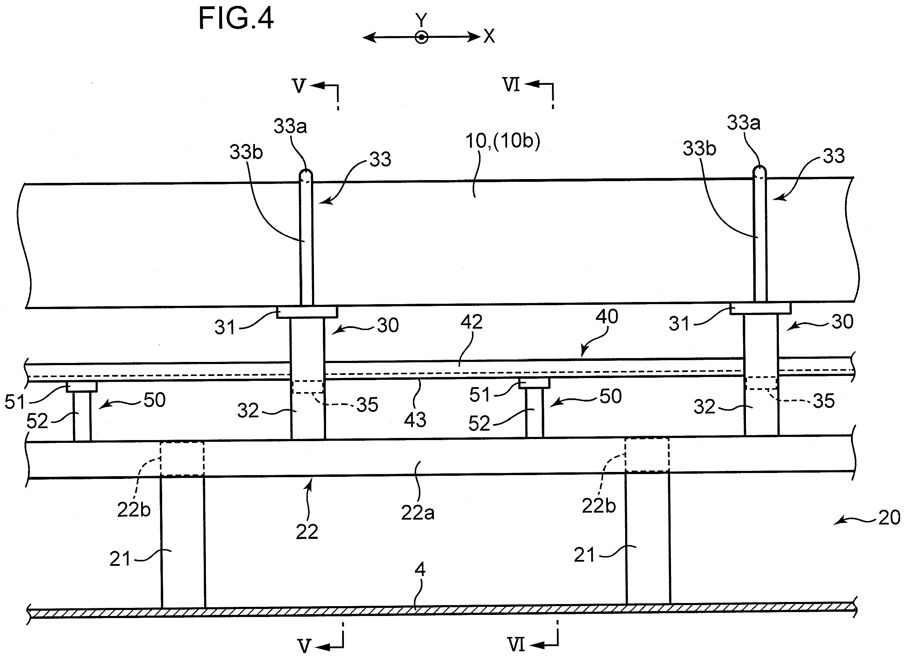

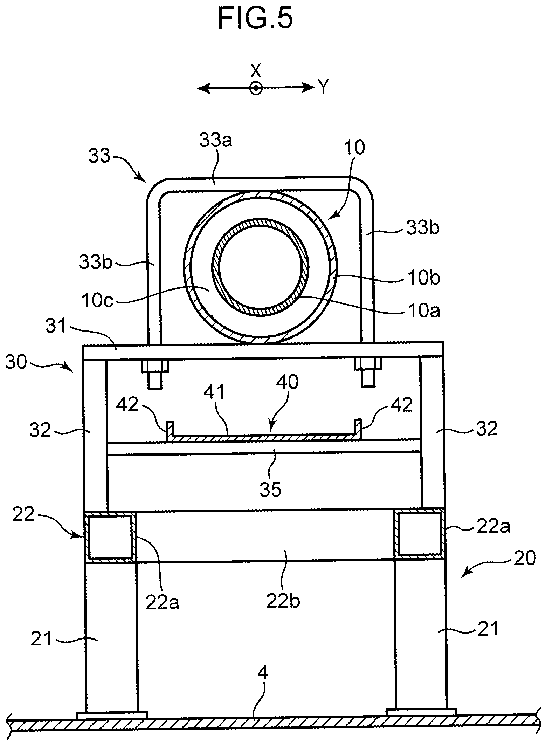

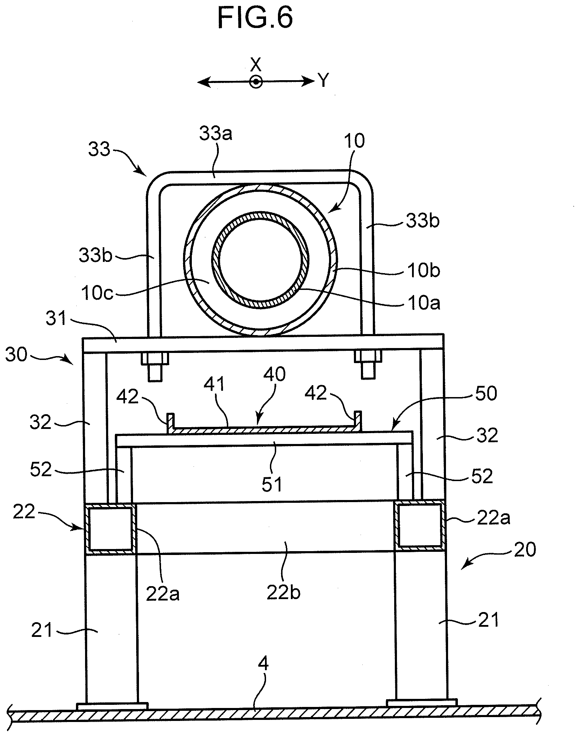

Each of Fig. 4 to Fig. 6 is a side view or a cross-sectional view of a structure which allows the tank cover 4 to support the hydrogen pipe 10. As shown in the drawings, the hydrogen pipe 10 is arranged above and away from the tank cover 4 at a predetermined distance therefrom, and is supported by the tank cover 4 via a base rack 20 and support members 30. The cross-sectional view of each of Fig. 5 and Fig. 6 omits illustration of the liquefied hydrogen L inside the inner pipe 10a. In the description below, a direction parallel to a central axis of the hydrogen pipe 10 is referred to as a pipe axial direction X, and a direction perpendicularly intersecting the pipe axial direction X and an up-down direction (vertical direction) is referred to as a pipe axis-perpendicular direction Y.

The base rack 20 includes columnar members 21 and an upper frame 22 supported by the columnar members 21. Each of the columnar members 21 has a columnar shape extending upward from the tank cover 4, and the columnar members 21 are fixed to the top surface of the tank cover 4 at intervals to separate from each other (scattered) in the pipe axial direction X and the pipe axis-perpendicular direction Y. The upper frame 22 has an assembly of flame members fixed to respective upper ends of the columnar members 21 in a grid pattern in a plan view. Specifically, the upper frame 22 has lengthwise frame members 22a each extending in the pipe axial direction X and crosswise frame members 22b connecting the lengthwise frame members 22a to each other in the pipe axis-perpendicular direction Y. Each lengthwise frame member 22a serves as a bridge to connect upper ends of the columnar members 21 aligning in the pipe axial direction X to each other, and each crosswise frame member 22b serves as a bridge to connect the upper ends of the columnar members 21 aligning in the pipe axis-perpendicular direction Y to each other.

The support members 30 are arranged in the pipe axial direction X on a top of the base rack 20. Each of the support members 30 has a base 31, a pair of legs 32, and a fixing member 33.

The base 31 is a plate-shaped member extending in the pipe axis-perpendicular direction Y just under the hydrogen pipe 10. The hydrogen pipe 10 is fixed to a top surface of the base 31 by the fixing member 33. In other words, the base 31 is in contact with a lower surface of the outer pipe 10b of the hydrogen pipe 10 and directly supports the hydrogen pipe 10. A lubricating member or a low frictional member may be arranged between the outer pipe 10b and the base 31 to permit the outer pipe 10b and the base 31 to shift relative to each other due to, for example, thermal contraction.

The fixing member 33 is a fastening member having an inverted U-shape in a front view, i.e., a U-bolt. Specifically, the fixing member 33 has an upper part 33a extending in the pipe axis-perpendicular direction Y, and a pair of side parts 33b extending downward from the opposite ends of the upper part 33a. The two side parts 33b are fastened to the base 31 respectively at left and right positions of the hydrogen pipe 10. In this manner, the upper part 33a and the base 31 sandwich the hydrogen pipe 10 therebetween to fix the hydrogen pipe 10 to the support member 30.

The two legs 32 respectively extend downward from right and left ends of the base 31, that is, from the opposite ends of the base 31 in the pipe axis-perpendicular direction Y. Each of the legs 32 has a lower end fixed to the upper frame 22 of the base rack 20. Specifically, the lower end of each of the legs 32 is fixedly attached to the corresponding lengthwise frame member 22a of the upper frame 22 by welding or other way.

A drip tray 40 is arranged between the hydrogen pipe 10 and the base rack 20, and extends in the pipe axial direction X. The drip tray 40 is a member having a relatively shallow quadrangular tray shape, and has a bottom section 41 having a flat shape extending long in the pipe axial direction X, and a pair of standing sections 42 respectively standing upward from the opposite ends of the bottom section 41 in the pipe axis-perpendicular direction Y. The drip tray 40 has a width in the pipe axis-perpendicular direction Y that is set to be equal to the diameter of the hydrogen pipe 10 or larger than the diameter of the hydrogen pipe 10. The width of the drip tray 40 is further set to be smaller than a distance between the two legs 32 of the support member 30, specifically, smaller than a distance from an inner surface of one of the legs 32 to an inner surface of the other of the legs 32. The drip tray 40 has a length in the pipe axial direction X that is set to be substantially equal to the entire length of the hydrogen pipe 10. In other words, the drip tray 40 extends substantially over the entire length of the hydrogen pipe 10. The drip tray 40 having the long shape may be formed by, for example, connecting tray fragments resulting from dividing in the pipe axial direction X.

The drip tray 40 is supported by the base rack 20 via tray support members 50 (see Fig. 4 and Fig. 6) arranged in the pipe axial direction X. Each of the tray support members 50 has a base 51 and a pair of legs 52.

The base 51 is a plate-shaped member extending in the pipe axis-perpendicular direction Y just under the drip tray 40. The drip tray 40 is fixedly attached to a top surface of the base 51 by welding or other way. In other words, the base 51 is in contact with a lower surface of the drip tray 40 and directly supports the drip tray 40. The drip tray 40 supported in this state extends between the pair of legs 32 of the support member 30 for the hydrogen pipe 10 in the pipe axial direction X. The base 51 is attached at a substantially middle height position between a lower surface of the hydrogen pipe 10 and a top surface of the base rack 20 to allow the drip tray 40 to lie below the hydrogen pipe 10 at a distance therefrom.

The two legs 52 respectively extend downward from right and left ends of the base 51, that is, from the opposite ends of the base 51 in the pipe axis-perpendicular direction Y. Each of the legs 52 has a lower end fixed to the upper frame 22 of the base rack 20. Specifically, the lower end of each of the legs 52 is fixedly attached to the corresponding lengthwise frame member 22a of the upper frame 22 by welding or other way.

As illustrated in Fig. 4 and Fig. 5, the support member 30 for the hydrogen pipe 10 further includes an auxiliary support member 35 to support the drip tray 40. The auxiliary support member 35 extends in the pipe axis-perpendicular direction Y at a height position just under the drip tray 40, and is provided to connect the two legs 32 of the support member 30 to each other in the pipe axis-perpendicular direction Y. The support member 30 including the auxiliary support member 35 exhibits both the function of supporting the hydrogen pipe 10 and the function of supporting the drip tray 40.

The support member 30, the drip tray 40, and the tray support member 50 are made of low-temperature steel having a property less likely to trigger embrittlement even under a cryogenic condition. For instance, each of the components constituting the support member 30, i.e., the base 31, the legs 32, and the fixing member 33, the auxiliary support member 35, each of the components constituting the tray support member 50, i.e., the base 51 and the legs 52, and the drip tray 40 can be made of austenite stainless steel which is a kind of low-temperature steel. Favorable examples of the austenite stainless steel particularly include low carbon stainless steel defined in the JIS standard, such as SUS304L and SUS316L. It is a matter of course that low-temperature steel, e.g., aluminum alloy or other material, is adoptable in place of the austenite stainless steel.

By contrast, each of the components of the base rack 20, i.e., the columnar members 21 and the upper frame 22, is made of steel material other than low-temperature steel, e.g., general structural soft steel, like the material of the tank cover 4. In other words, the base rack 20 and the tank cover 4 are made of steel material which is more likely to trigger low-temperature embrittlement than low-temperature steel under a cryogenic condition.

As described heretofore, in the embodiment, the tank cover 4 supports the hydrogen pipe 10 that allows the liquefied hydrogen L to flow therethrough via the support member 30 made of low-temperature steel, and the drip tray 40 lies below the hydrogen pipe 10. This is advantageous to suppression of embrittlement of other member attributed to a decrease in the temperature of the hydrogen pipe 10.

The hydrogen pipe 10 has a double structure including the inner pipe 10a, the outer pipe 10b, and the vacuumed layer 10c defined between the inner and outer pipes 10a, 10b. Hence, the temperature of the outer pipe 10b is kept at a sufficiently higher value than the value of the temperature of the inner pipe 10a even when the liquefied hydrogen L flows into the inner pipe 10a as long as the vacuum degree of the vacuumed layer 10c is satisfactory. However, the vacuum degree of the vacuumed layer 10c may decrease because of long running of the vessel 1. An occurrence of such a decrease in the vacuum degree induces heat transfer between the inner pipe 10a and the outer pipe 10b, and thus reduces a temperature difference between the outer pipe 10b and the inner pipe 10a. In an extreme example, the temperature of the outer pipe 10b may decrease to a value around the temperature of the liquefied hydrogen in the inner pipe 10a. Here, the hydrogen pipe 10 generally has a structure including unit pipes each having a finite length in the pipe axial direction X and connected to each other in the direction. Thus, the vacuum degree does not uniformly decrease over the entire length of the hydrogen pipe 10. That is to say, a decrease rate of the vacuum degree is considered to vary depending on a position in the pipe axial direction X or depending on a unit pipe. It is seen from this perspective that an occurrence of a decrease in the temperature of the outer pipe 10b to a value around the temperature of the liquefied hydrogen L is normally limited to a certain portion of the hydrogen pipe 10. Under the circumstances, such a portion as a portion of the hydrogen pipe 10 having a surface temperature (temperature of the outer pipe 10b) decreased to a value around the temperature of the liquefied hydrogen L is particularly referred to as "temperature decreasing portion".

In the temperature decreasing portion of the hydrogen pipe 10, the temperature of the outer pipe 10b decreases to a value around the temperature of the liquefied hydrogen L. If the temperature decreasing portion is provided with the support member 30, the support member 30 would be notably cooled through heat transfer with the temperature decreasing portion. In particular, the base 31 and the fixing member 33 of the support member 30, each being in contact with the hydrogen pipe 10, are notably cooled. Further, at the temperature decreasing portion of the hydrogen pipe 10, nitrogen or oxygen contained in air may be condensed on the surface of the outer pipe 10b, and liquefied air containing liquefied nitrogen or liquefied oxygen may come into existence on the surface. A drop of the liquefied air then flows on the surface of the outer pipe 10b and reaches the support member 30, and the support member 30 is notably cooled by the liquefied air. If the support member 30 is made of general structural soft steel in the same manner as the tank cover 4 in these cases, the support member 30 would be likely to embrittle due to low-temperature embrittlement and fail to reliably support the hydrogen pipe 10. By contrast, the embodiment adopts low-temperature steel having a property less likely to trigger embrittlement even under a cryogenic condition for the support member 30. This configuration hence attains satisfactory suppression of low-temperature embrittlement of the support member 30 even when the support member 30 is notably cooled, and enables the support member 30 to favorably maintain enough strength to support the hydrogen pipe 10.

In the embodiment, the drip tray 40 lies below the hydrogen pipe 10. Thus, even when a drop of the liquefied air coming into existence at the temperature decreasing portion of the hydrogen pipe 10 in the aforementioned manner falls from the hydrogen pipe 10, the drip tray 40 can receive the drop of the liquefied air and further allows the liquefied air having been received to rapidly evaporate owing to the temperature of the drip tray 40. This keeps the liquefied air from reaching the tank cover 4 and notably cooling the tank cover 4, and thus results in achieving appropriate protection of the tank cover 4 from low-temperature embrittlement.

In the embodiment, the drip tray 40 extends in the pipe axial direction X of the hydrogen pipe 10. Thus, even when the temperature drastically decreases in many portions of the hydrogen pipe 10 at intervals in the pipe axial direction X, the drip tray 40 can reliably receive the liquefied air coming into existence at each of the temperature decreasing portions therefrom.

In the embodiment, the drip tray 40 extends between the pair of legs 32 of the support member 30 in the pipe axial direction X, and thus, the drip tray 40 can lie at an appropriate position below the hydrogen pipe 10 while avoiding contact between the drip tray 40 and the support member 30. This configuration achieves compatibility between the reliable supporting of the hydrogen pipe 10 by the support member 30 and the reliable receiving of the liquefied air by the drip tray 40.

In the embodiment, the tray support member 50 supports the drip tray 40, and the drip tray 40 and the tray support member 50 are made of low-temperature steel. This configuration attains suppression of low-temperature embrittlement of the drip tray 40 and the tray support member 50 attributed to a drop of the liquefied air from the hydrogen pipe 10 to the drip tray 40.

In the embodiment, the base rack 20 made of general structural soft steel in the same manner as the tank cover 4 is assembled on the tank cover 4, and the support member 30 and the tray support member 50 are attached to the top of the upper frame 22 of the base rack 20. This configuration attains a reduction in the proportion of the low-temperature steel occupying each of the various members for supporting the pipe, while satisfactorily increasing the distance between the hydrogen pipe 10 and the tank cover 4 in the up-down direction. This accomplishes a rational structure without a significant cost increase, resulting in reducing a possibility that a drop of liquefied air from the hydrogen pipe 10 reaches the tank cover 4.

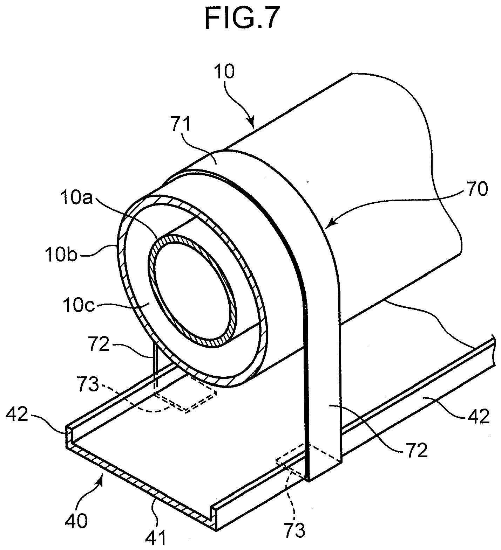

Although the tray support member 50 that supports the drip tray 40 is attached onto the upper frame 22 of the base rack 20 in the embodiment, another structure in which the hydrogen pipe 10 supports the drip tray 40 by itself as shown in Fig. 7 may be adopted instead. Specifically, in a modification shown in Fig. 7, the drip tray 40 is supported by a support member 70 having an inverted U-shape and attached to the hydrogen pipe 10. The support member 70 has a fixed part 71 fixed to an upper surface of the hydrogen pipe 10, a pair of extension parts 72 respectively extending downward from right and left ends of the fixed part 71, and a pair of support parts 73 extending inward from respective lower ends of the extension parts 72. The drip tray 40 is fixedly attached to the support member 70 by welding or other way in a state of lying on respective top surfaces of the support parts 73.

Although the drip tray 40 extends substantially over the entire length of the hydrogen pipe 10 in the embodiment, the drip tray may be provided limitedly below a specific portion of the hydrogen pipe 10 where a temperature is likely to decrease in particular, or where a vacuum degree is estimated in advance to easily decrease.

Although the drip tray 40 has a quadrangular tray shape, and has the bottom section 41 and the pair of standing sections 42 in the embodiment, the drip tray in the disclosure is only required to have a shape suited to receiving of a drop of liquefied air coming into existence on the surface of the hydrogen pipe 10. Therefore, a drip tray having any kind of shape is adoptable to that extent. For instance, a simple flat member may be adopted as the drip tray.

Although low-temperature steel is used as a material for the drip tray 40, the drip tray may be made of different steel material other than the low-temperature steel when the drip tray is used together with a heat insulator or sands, that is, when the heat insulator or the sands are laid on the top surface of the drip tray.

Although the embodiment exemplifies the structure where the hydrogen pipe 10 is arranged above the tank cover 4 in the vessel 1, the hydrogen pipe may be arranged above the deck 7 or may be arranged in a cargo hold chamber, as well as above the tank cover 4. The support structure like the one in the embodiment can be applied to a hydrogen pipe arranged in a place other than the place above the tank cover 4 as described above.

Although the pipe having the double structure including the inner pipe 10a, the outer pipe 10b, and the vacuumed layer 10c defined between the inner and outer pipes is adopted as the hydrogen pipe 10 in the embodiment, a pipe in a no-double structure without a vacuumed layer is adoptable as the low-temperature pipe. For instance, a pipe including: a main pipe made of low-temperature steel; and a heat insulative layer, such as a urethane layer, on an outer surface of the main pipe is adoptable as the low-temperature pipe.

The described embodiment exemplifies application of the pipe structure in the disclosure to the vessel 1 that stores and carries the liquefied hydrogen L having the boiling point of -253°C under a normal pressure. The pipe structure in the disclosure is applicable to any vessel that stores a cryogenic liquid having a boiling point of -196°C or lower under a normal pressure, and thus various kinds of vessels can adopt the pipe structure in this disclosure to that extent. For instance, the pipe structure in the disclosure is applicable to a vessel that stores liquefied helium having a boiling point of -269°C under a normal pressure or liquefied nitrogen having a boiling point of -196°C under the normal pressure.

The embodiment and modifications described heretofore include the following aspects.

A cryogenic liquid pipe structure according to one aspect of the present disclosure is for use in a vessel that stores a cryogenic liquid having a boiling point of -196°C or lower under a normal pressure. The cryogenic liquid pipe structure includes: a low-temperature pipe that allows the cryogenic liquid to flow therethrough; and a support member that is in contact with the low-temperature pipe and supports the low-temperature pipe above and away from a structural member of the vessel. The support member is made of low-temperature steel which is less likely to trigger low-temperature embrittlement.

The low-temperature pipe that allows the cryogenic liquid having the boiling point of -196°C or lower under the normal pressure to flow therethrough has a possibility that a surface temperature of at least a portion of the pipe decreases to a value around the temperature of the cryogenic liquid. If a temperature decreasing portion where a drastic decrease in the temperature occurs is provided with the support member, the support member would be notably cooled through heat transfer with the temperature decreasing portion. Further, nitrogen or oxygen contained in air may be condensed on a surface of the temperature decreasing portion, and liquefied air containing liquefied nitrogen or liquefied oxygen may come into existence. A drop of the liquefied air then flows on the surface of the pipe and reaches the support member, and the support member is notably cooled by the liquefied air. If the support member is made of the same material as that of the structural member of the vessel in these cases, the support member would be more likely to embrittle due to low-temperature embrittlement and may fail to reliably support the low-temperature pipe. By contrast, in the disclosure, the support member is made of low-temperature steel having a property less likely to trigger low-temperature embrittlement. This configuration hence attains satisfactory suppression of low-temperature embrittlement of the support member even when the support member is notably cooled in the aforementioned manner, and enables the support member to favorably maintain enough strength to support the low-temperature pipe.

The above-described support member located between the structural member of the vessel and the low-temperature pipe leads to a reduction in the possibility that liquefied air coming into existence at the temperature decreasing portion of the low-temperature pipe as described above flows to directly reach the structural member. For instance, a drop of the liquefied air from the low-temperature pipe may be deposited on the support member and evaporate, or may be deposited on a certain pipe component other than the support member and evaporate. This configuration reduces the possibility that the liquefied air reaches the structural member, and thus can keep the structural member from being notably cooled to embrittle.

The pipe structure preferably further includes a drip tray that lies below the low-temperature pipe to receive a drop of liquefied air from a surface of the low-temperature pipe.

According to this configuration, the drip tray can reliably receive the drop of the liquefied air from the low-temperature pipe, and further allows the drop of liquefied air to evaporate. This configuration prevents the liquefied air from reaching the structural member with a sufficiently high probability, and achieves appropriate protection of the structural member from low-temperature embrittlement.

In this configuration, the drip tray preferably has a shape extending in a pipe axial direction of the low-temperature pipe.

According to this configuration, even when the temperature drastically decreases in many portions of the low-temperature pipe at intervals in the pipe axial direction, the drip tray can reliably receive the liquefied air coming into existence at each of the temperature decreasing portions therefrom.

In this configuration, it is preferable that the support member has a base that is in contact with a lower surface of the low-temperature pipe and supports the low-temperature pipe, a fixing member that fixes the low-temperature pipe to the base, and at least a pair of legs extending downward from the base, and that the drip tray extends between the pair of legs in the pipe axial direction.

This configuration allows the drip tray to lie at an appropriate position below the low-temperature pipe while avoiding contact between the drip tray and the support member. The configuration thus achieves compatibility between the reliable supporting of the low-temperature pipe by the support member and the reliable receiving of the liquefied air by the drip tray.

The pipe structure preferably further includes: a tray support member that supports the drip tray below the low-temperature pipe. The drip tray and the tray support member are preferably made of low-temperature steel which is less likely to trigger low-temperature embrittlement.

This configuration attains suppression of low-temperature embrittlement of the drip tray and the tray support member attributed to a drop of liquefied air from the low-temperature pipe to the drip tray.

In this configuration, the pipe structure preferably further includes a base rack that is fixed to a top surface of the structural member and made of steel material which is more likely to trigger low-temperature embrittlement than the low-temperature steel. The base rack preferably includes: columnar members extending upward from the structural member; and an upper frame fixed to an upper end of each of the columnar members. The support member and the tray support member are preferably attached to a top of the upper frame.

The arrangement of the support member and the tray support member on the top of the base rack assembled on the structural member of the vessel attains a reduction in the proportion of the low-temperature steel occupying each of the various members for supporting the pipe, while satisfactorily increasing the distance between the low-temperature pipe and the structural member of the vessel in the up-down direction. This accomplishes a rational structure without a significant cost increase, resulting in reducing a possibility that a drop of liquefied air from the low-temperature pipe reaches the structural member.

The support member may have a fixed part fixed to the low-temperature pipe, and a support part supporting the drip tray.

This configuration also enables appropriate arrangement of the drip tray below the low-temperature pipe.

A vessel according to another aspect of the disclosure stores a cryogenic liquid having a boiling point of -196°C or lower under a normal pressure. The vessel includes: a tank that stores the cryogenic liquid; a tank cover that covers the tank; a deck; and the above-described cryogenic liquid pipe structure. The structural member is preferably the tank cover or the deck.

This disclosure achieves reliable supporting of the low-temperature pipe above the tank cover or the deck, and protection of the tank cover or the deck from low-temperature embrittlement.

## Claims

1. A cryogenic liquid pipe structure for use in a vessel that stores a cryogenic liquid having a boiling point of -196°C or lower under a normal pressure, the cryogenic liquid pipe structure comprising:
a low-temperature pipe that allows the cryogenic liquid to flow therethrough; and
a support member that is in contact with the low-temperature pipe and supports the low-temperature pipe above and away from a structural member of the vessel, wherein
the support member is made of low-temperature steel which is less likely to trigger low-temperature embrittlement.

2. The cryogenic liquid pipe structure according to claim 1, further comprising a drip tray that lies below the low-temperature pipe to receive a drop of liquefied air from a surface of the low-temperature pipe.

3. The cryogenic liquid pipe structure according to claim 2, wherein the drip tray has a shape extending in a pipe axial direction of the low-temperature pipe.

4. The cryogenic liquid pipe structure according to claim 3, wherein the support member has a base that is in contact with a lower surface of the low-temperature pipe and supports the low-temperature pipe, a fixing member that fixes the low-temperature pipe to the base, at least a pair of legs extending downward from the base, and
the drip tray extends between the pair of legs in the pipe axial direction.

5. The cryogenic liquid pipe structure according to any one of claims 2 to 4, further comprising a tray support member that supports the drip tray below the low-temperature pipe, wherein
the drip tray and the tray support member are made of low-temperature steel which is less likely to trigger low-temperature embrittlement.

6. The cryogenic liquid pipe structure according to claim 5, further comprising a base rack that is fixed to a top surface of the structural member and made of steel material which is more likely to trigger low-temperature embrittlement than the low-temperature steel, the base rack including:
columnar members extending upward from the structural member; and
an upper frame fixed to an upper end of each of the columnar members, and
the support member and the tray support member are attached to a top of the upper frame.

7. The cryogenic liquid pipe structure according to claim 2, wherein the support member has a fixed part fixed to the low-temperature pipe, and a support part to support the drip tray.

8. A vessel that stores a cryogenic liquid having a boiling point of -196°C or lower under a normal pressure, the vessel comprising:
a tank that stores the cryogenic liquid;
a tank cover that covers the tank;
a deck; and
the cryogenic liquid pipe structure according to any one of claims 1 to 7, wherein
the structural member is the tank cover or the deck.
